# EUROPÄISCHE PATENTSCHRIFT

(11) **EP 1 130 764 B1**
(45) Veröffentlichungstag und Bekanntmachung des Hinweises auf die Patenterteilung: **02.05.2007**
(21) Anmeldenummer: 01810167.5
(22) Anmeldetag: 19.02.2001
(51) Int. Cl.: H02P 9/08

(54) **Kraftwerksanlage**
Power plant installation
Installation d'une centrale d'énergie

(30) Priorität: 23.02.2000 DE 10008457
(43) Veröffentlichungstag der Anmeldung: 05.09.2001
(73) Patentinhaber: Alstom Technology Ltd, 5400 Baden (CH)
(72) Erfinder: Schütte, Thomas, 5300 Turgi (CH)

(56) Entgegenhaltungen:
- US-A- 4 069 424
- US-A- 4 245 163
- US-A- 5 323 328
- US-A- 5 416 398

## Beschreibung

### TECHNISCHES GEBIET

Die vorliegende Erfindung bezieht sich auf das Gebiet der Kraftwerkstechnik. Sie betrifft eine Kraftwerksanlage mit einer Mehrzahl von gleichartigen Untereinheiten gemäss dem Oberbegriff des Anspruchs 1.

Ein solches Kraftwerk ist z.B. aus der US-A-3,764,815 (Fig. 6) oder der US-A-4,069,424 bekannt.

### STAND DER TECHNIK

Bereits seit einigen Jahrzehnten werden in Pumpspeicher-Kraftwerken oder Gasturbinen-Kraftwerken statische Frequenzumrichter (Static Frequency Converters SFC) in statischen Starteinrichtungen (Static Starting Devices SSD) eingesetzt, um die Generatoren des Kraftwerkes (Gasturbinenkraftwerke respektive Motoren von Pumpen Turbinen in Pumpspeicher-Kraftwerken) aus dem Stillstand auf eine Rotationsgeschwindigkeit hochzufahren, in welcher sie selbständig weiterlaufen können. Bei einem solchen Start wird der Synchrongenerator als Synchronmotor betrieben, wobei die notwendige elektrische Leistung für die Statoranschlüsse mit variabler Frequenz und Spannung vom statischen Frequenzumrichter bereitgestellt wird. In Anlagen mit einer Mehrzahl von Turbinen-Generator-Einheiten, Pump/Turbinen Motor-Einheiten (Untereinheiten) wird dabei ein statischer Frequenzumrichter häufig für mehrere Einheiten benutzt, um die Anlagenkosten niedrig zu halten. Dies macht jedoch in der Regel zusätzliche zentrale Steuerungsfunktionen notwendig, damit der gemeinsame statische Frequenzumrichter für die angeschlossenen Untereinheiten durch deren Steuerungen benutzt werden kann.

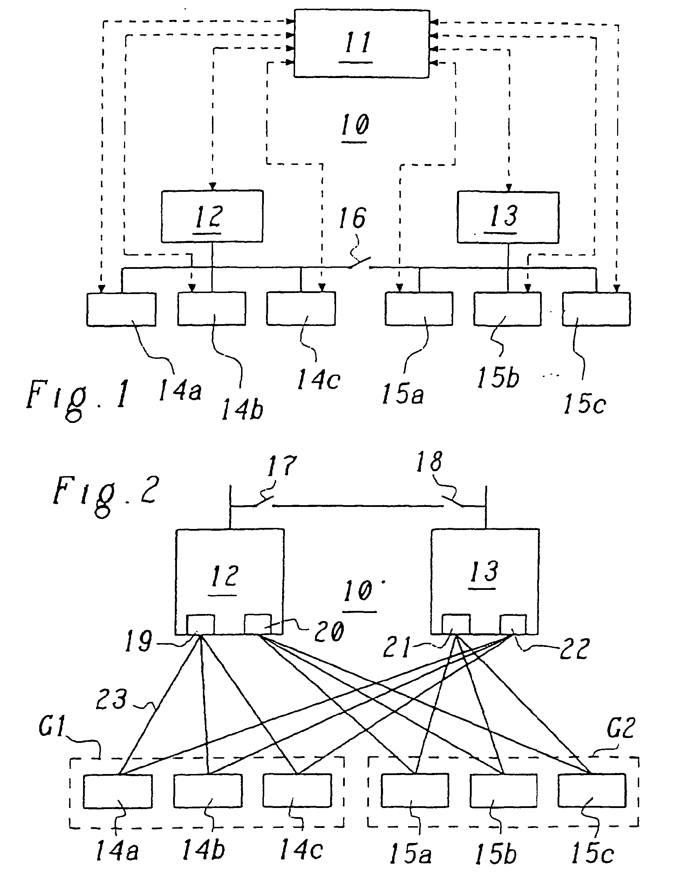

In der Vergangenheit ist eine solche zentrale Steuerungsfunktion immer durch eine zentrale Steuerung verwirklicht worden, welche die verschiedenen digitalen und analogen Signale, bzw. die auf dem Bus übertragenen Signale, zwischen dem statischen Frequenzumrichter und der hochzufahrenden Untereinheit zuordnet. Ein Beispiel einer solchen zentralen Steuerung ist in Fig. 1 wiedergegeben: Im Kraftwerk 10 sind in diesem Beispiel sechs Untereinheiten mit den zugehörigen Steuerungen 14a-c (Gruppe 1) und 15a-c (Gruppe 2) vorgesehen. Jeder Gruppe ist eine statische Starteinrichtung 12 bzw. 13 zugeordnet und kann mit den einzelnen Steuerungen 14a-c bzw. 15a-c der Gruppe über entsprechende Verbindungen Daten bzw. Signale austauschen. Eine durch einen Segment-Trennschalter 16 auftrennbare Verbindung zwischen den beiden Gruppen ermöglicht es zusätzlich, im Notfall eine der statischen Starteinrichtungen 12, 13 auch mit Untereinheiten der jeweils anderen Gruppe zu verbinden. Welche der Untereinheiten bzw. der Steuerungen 14a-c und 15a-c eine der statischen Starteinrichtungen 12 ,13 für einem Startvorgang in Anspruch nimmt, wird durch eine zentrale Steuerung 11 festgelegt, die sowohl mit den Steuerungen 14a-c, 15a-c der Untereinheiten als auch mit den statischen Starteinrichtungen 12, 13 Informationen austauscht.

Nachteilig bei dieser bekannten Lösung ist, dass die zusätzliche zentrale Steuerungsfunktion für jede spezifische Anlagenkonfiguration eigens ausgelegt werden muss. Dies betrifft beispielsweise die Anzahl der statischen Starteinrichtungen (primäre und Ersatz-Einrichtungen) pro Anzahl der Untereinheiten, welche die Starteinrichtung im Normalfall bzw. im Notfall benutzen, wenn eine der Starteinrichtungen ausgefallen ist. Darüber hinaus muss die zentrale Steuerung beim Aufbau der Kraftwerksanlage ständig auf den neusten Stand gebracht werden, um die Steuerlogik der gerade bestehenden Anlagenkonfiguration und Verfügbarkeit von Starteinrichtungen und Untereinheiten anzupassen. Dieser Anpassungsprozess hat sich als kostspielig und zeitaufwendig herausgestellt.

### DARSTELLUNG DER ERFINDUNG

Es ist daher Aufgabe der Erfindung, eine Kraftwerksanlage hinsichtlich der Starteinrichtungen so zu gestalten, dass die aufgeführten Nachteile beseitigt werden, und dass insbesondere durch Einsparung einer zentralen Steuerungsfunktion die Engineering- und Anlagenkosten deutlich gesenkt werden.

Die Aufgabe wird durch die Gesamtheit der Merkmale des Anspruchs 1 gelöst. Der Kern der Erfindung besteht darin, durch eine dezentralisierte Zuweisungslogik ("decentralized allocation logic structure") in jeder Steuerung einer Untereinheit in gleicher Weise und unmittelbar eine Information zu erzeugen und zu hinterlegen, wenn die jeweilige Starteinrichtung gerade von einer Untereinheit benutzt wird und damit für eine weitere Benutzung durch eine andere Untereinheit ausscheidet bzw. belegt ist. Die Steuerungen der anderen Untereinheiten wissen dann sofort, dass die statische Starteinrichtung für einen Start gerade nicht zur Verfügung steht und können dementsprechend reagieren. Da jede Untereinheit immer über die aktuelle Verfügbarkeit der zugehörigen Starteinrichtung informiert ist, entfällt die Notwendigkeit für eine zentrale Steuerung und der damit verbundene Aufwand.

Gemäss einer bevorzugten Ausgestaltung der Erfindung wird zur Beschreibung der Verfügbarkeit der statischen Starteinrichtung ein Belegungssignal ("flag") verwendet, welches gesetzt wird, wenn eine der Steuerungen unter Einsatz der zugehörigen statischen Starteinrichtung einen Start einleitet, und zurückgesetzt wird, wenn keine der Steuerungen einen Start einleitet und die zugehörige statische Starteinrichtung frei verfügbar ist, wobei das Belegungssignal insbesondere von einer Funktion oder Einheit der Kraftwerksanlage abgeleitet wird, welche eine sichere Anzeige des momentanen Belegungszustandes der statischen Starteinrichtung ermöglicht.

Dies kann entweder, dadurch geschehen, dass das Belegungssignal durch die statische Starteinrichtung selbst erzeugt wird, oder dass das Belegungssignal durch ein Bauteil bzw. eine Einheit erzeugt wird, welche(s) der jeweiligen Untereinheit zugeordnet ist und seinen Zustand ändert, wenn ein Startvorgang eingeleitet wird. Im letztgenannten Fall wird, wenn zum Verbinden von Untereinheit und statischer Starteinrichtung beim Startvorgang jeweils ein Anfahr-Trennschalter vorgesehen ist, welcher als Hochspannungsschalter die statische Starteinrichtung mit dem Generatorbus der Untereinheit verbindet, das Belegungssignal von dem Anfahr-Trennschaltern erzeugt bzw. abgeleitet.

Eine weitere bevorzugte Ausgestaltung der Erfindung ist dadurch gekennzeichnet, dass die Untereinheiten bzw. deren Steuerungen zu Gruppen zusammengefasst sind, dass jeder Gruppe für den Normalbetrieb eine eigene statische Starteinrichtung zugeordnet ist, dass jede der Steuerungen einer Gruppe mit der zugehörigen statischen Starteinrichtung über einen ersten Kanal verbunden ist, dass jede der Steuerungen einer Gruppe mit der statischen Starteinrichtung einer anderen Gruppe über einen zweiten Kanal verbunden ist, und dass die Verbindung über die zweiten Kanäle nur dann aktiviert ist, wenn in einem Notfall die eigene statische Starteinrichtung der Gruppe nicht zur Verfügung steht.

Die Verbindung zwischen den Steuerungen und den zugehörigen statischen Starteinrichtungen kann insbesondere durch eine feste Verdrahtung erfolgen. Es ist aber auch denkbar, dass die Verbindung zwischen den Steuerungen und den zugehörigen statischen Starteinrichtungen über einen Daten- bzw. Signalbus erfolgt.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: einen Ausschnitt aus dem vereinfachten Schaltbild einer herkömmlichen Kraftwerksanlage mit einer Mehrzahl von Leistung erzeugenden, aus Turbine resp. Pumpen und Generator/Motor bestehenden Untereinheiten resp. Motoren für Pump-Turbinen, und statischen Starteinrichtungen, wobei das Zusammenwirken der Starteinrichtungen und der lokalen Steuerungen der Untereinheiten durch eine zentrale Steuerung gesteuert wird;
- Fig. 2: einen zu Fig. 1 vergleichbaren Ausschnitt aus dem Schaltbild einer Kraftwerksanlage gemäss einem bevorzugten Ausführungsbeispiel der Erfindung mit einer dezentralen Zuweisungslogik und einem direkten Datenaustausch zwischen den Steuerungen und den Starteinrichtungen über eine feste Verdrahtung;
- Fig. 3: ein Ausführungsbeispiel für eine Logik nach der Erfindung, mit der eine Belegungssignal für die Starteinrichtungen abgeleitet bzw. erzeugt werden kann;
- Fig. 4: ein detailliertes Ausführungsbeispiel für einen fest verdrahteten Signalaustausch zwischen Steuerungen und Starteinrichtungen gemäss Fig. 2 in der Uebertragungsrichtung von den Steuerungen zu den Starteinrichtungen; und
- Fig. 5: die zu Fig. 4 entsprechende Uebertragung in der Gegenrichtung.

### WEGE ZUR AUSFÜHRUNG DER ERFINDUNG

Die nachfolgenden Erläuterungen der Erfindung gehen aus von einer Konfiguration, wie sie in Fig. 2 wiedergegeben ist. In dem dort ausschnittweise dargestellten Anlagenschema einer Kraftwerksanlage 10' sind insgesamt 6 in zwei Gruppen G1 und G2 angeordnete Untereinheiten (aus Turbine und Generator/Motor resp. Pump-Turbine mit Motor) mit ihren Steuerungen 14a-c und 15a-c vorgesehen, sowie zwei statische Starteinrichtungen 12 und 13. Die statischen Starteinrichtungen 12 und 13 werden ausgangsseitig an den Generatobus über die Anfahr-Trennschalter angeschlossen. Im Notfall kann über zugeordnete Segment-Trennschalter 17, 18 der ausgangsseitige Bus miteinander verbunden werden. Für den Normalbetrieb ist jeder Gruppe G1, G2 von Untereinheiten eine der statischen Starteinrichtungen 12 bzw. 13 zugeordnet. In Fig. 2 ist der Gruppe G1 die statische Starteinrichtung 12 zugeordnet, der Gruppe G2 die statische Starteinrichtung 13. Beide statischen Starteinrichtungen 12, 13 sind mit zwei Kanälen 19, 20 bzw. 21, 22 ausgerüstet. Ueber den ersten Kanal 19 bzw. 21 sind (für den Normalfall) die statischen Starteinrichtungen 12, 13 jeweils mit den einzelnen Untereinheiten bzw. deren Steuerungen 14a-c bzw. 15a-c der zugehörigen Gruppe G1, G2 verbunden. Ueber den zweiten Kanal 20 bzw. 22 sind (für den Notfall) die statischen Starteinrichtungen 12, 13 jeweils mit den einzelnen Untereinheiten bzw. deren Steuerungen 15a-c bzw. 14a-c der jeweils anderen Gruppe G2 bzw. G1 verbunden. Die Verbindung erfolgt im dargestellten Fall durch fest verdrahtete, diskrete Signale (Verbindungsleitungen 23). Eine zentrale Steuerung für den Daten- bzw. Signalaustausch zwischen Starteinrichtungen und Steuerungen wie in Fig. 1 fehlt erfindungsgemäss.

Diese dezentralisierte Zuweisungslogik ermöglicht die Zuweisung von Zugriffsrechten auf eine statische Starteinrichtung für jede der angeschlossenen Steuerungen innerhalb der zugehörigen Gruppe nachdem Prinzip des "wer zuerst kommt, mahlt zuerst". Da auf eine zentrale Steuerung und zentrale Intelligenz vollständig verzichtet wird, muss jede der Steuerungen selbst in der Lage sein, zu entscheiden, ob es die gemeinsame statische Starteinrichtung benutzen kann, oder ob die Starteinrichtung gerade durch eine andere Untereinheit derselben Gruppe benutzt wird und damit belegt ist.

Zu diesem Zweck empfängt jede der Steuerungen 14a-c bzw. 15a-c ein bestimmtes Signal (Belegungssignal), das immer dann erzeugt wird, wenn irgendeine Steuerung derselben Gruppe durch Zugriff auf die zugehörige statische Starteinrichtung 12 bzw. 13 eine Start eingeleitet hat. Dieses Belegungssignal kann als ein "Flag" beschrieben werden. Das "Flag" kann von irgendeiner Funktion oder Einheit der Kraftwerksanlage 10' abgeleitet werden, die eine sichere Anzeige des momentanen Belegungszustandes der Starteinrichtung ermöglicht. So kann das "Flag" entweder durch die statische Starteinrichtung selbst (z.B. in Form eines binären Signals) erzeugt werden oder durch ein Bauteil oder eine Einheit der Kraftwerksanlage, die der jeweiligen Untereinheit zugeordnet sind und ihren Status ändern, sobald der Startvorgang eingeleitet worden ist.

In dem vorliegenden Ausführungsbeispiel wird das Belegungssignal von einem Anfahr-Trennschalter abgeleitet, der als Hochspannungsschalter zum Starten die statische Starteinrichtung mit dem Generatorbus der jeweiligen Untereinheit verbindet. Dieses Signal (im vorliegenden Fall ein binäres Signal) wird jeder Steuerung innerhalb der einen Gruppe verfügbar gemacht und zusätzlich den Steuerungen der anderen Gruppe, die im Notfall derselben statischen Starteinrichtung zugeordnet werden können. Jede der Steuerungen 14a-c und 15a-c wird mit der dezentralen Zuweisungslogik programmiert, die eine exakte Kopie der Anlagenkonfiguration darstellt.

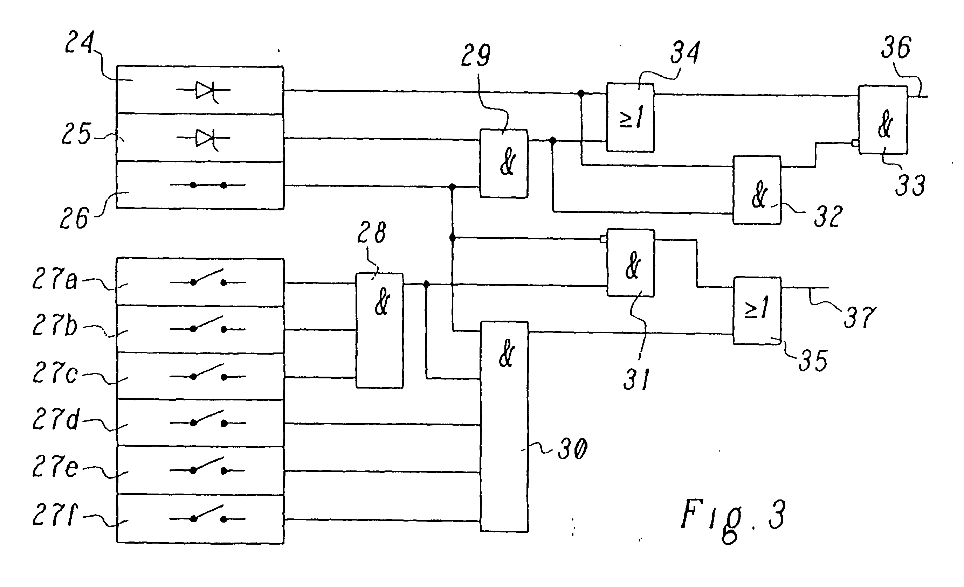

Ein Beispiel für eine solche Zuweisungslogik für eine Steuerung der ersten Gruppe G1 ist in Fig. 3 wiedergegeben: Ausgangspunkt sind die beiden statischen Starteinrichtungen 24 und 25 (gekennzeichnet durch ein Thyristorsymbol)der ersten und zweiten Gruppe G1 bzw. G2, der Segment-Trennschalter 26 (zwischen den Starteinrichtungen) und die Anfahr-Trennschalter 27a-f der einzelnen Steuerungen 14a-c und 15a-c der Untereinheiten. Bereitgestellt wird durch die Logik an einem ersten Flag-Ausgang 36 ein durch die Starteinrichtungen erzeugtes "Flag", und an einem zweiten Flag-Ausgang 37 ein durch die Schaltverbindungen erzeugtes "Flag". Die logischen Verknüpfungen der binären Eingangssignale erfolgen über verschiedene UND-Gatter 28-33 und ODER-Gatter 34, 35. Die Gatter 32, 33 und 34 bilden zusammen ein exklusives ODER-Gatter, das ein "Flag" setzt, wenn entweder die Starteinrichtung 24 der ersten Gruppe G1 ein Belegungssignal gibt (Normalfall), oder die Starteinrichtung 25 der zweiten Gruppe G2 bei gleichzeitig geschlossenem Segment-Trennschalter 26 ein Belegungssignal gibt (Notfall).

Am zweiten Flag-Ausgang 37 ist das "Flag" gesetzt, wenn entweder alle Anfahr-Trennschalter 27a-c der ersten Gruppe und der Segment-Trennschalter 26 offen sind, oder wenn der Segment-Trennschalter 26 geschlossen ist und die Anfahr-Trennschalter 27a-f beider Gruppen offen sind. Sobald einer der Schalter im Zuge eines Startvorgangs geschlossen wird das "Flag" am Flag-Ausgang 37 zurückgesetzt und signalisiert eine Belegung.

Damit die Engineeringkosten für spezielle Projekte verringert bzw. ganz vermeiden werden können, sind die einzelnen Steuerungen 14a-c, 15a-c für die-Maximalkonfiguration ausgelegt (d.h. für die Maximalzahl von Steuerungen pro statischer Starteinrichtung). Eine Anpassung an abweichende Konfigurationen kann dann auf einfache Weise dadurch erreicht werden, dass an den binären Eingängen derjenigen Einheiten, die nicht oder noch nicht existieren, Drahtbrücken eingesetzt werden.

Durch die Verwendung der neuartigen dezentralisierten Zuweisungslogik hat jede Steuerung einer Untereinheit eine exakte Kopie des momentanen Zustandes der Anlage im Bezug auf die Belegung der statischen Starteinrichtungen. Bevor eine Starteinrichtung für einen Start eingesetzt werden kann, muss die entsprechende Steuerung abklären, ob die Starteinrichtung nicht gerade von einer anderen Steuerung bzw. Untereinheit derselben Gruppe für einen Startvorgang belegt ist. Wenn die Starteinrichtung für einen Start verfügbar ist, leitet die Steuerung den Start ein und blockiert eine Belegung der Starteinrichtung durch andere Steuerungen der Gruppe. Dies geschieht durch ein sofortiges Setzen des "Flags" (im beschriebenen Fall durch Schliessen des Anfahr-Trennschalters). Aufgrund der dezentralisierten Zuweisungslogik hat dann jede Steuerung derselben Gruppe eine Kopie der genau gleichen "Flag"-Einstellungen und damit des aktuellen Belegungszustandes der Starteinrichtung.

Wie aus Fig. 2 hervorgeht, hat jede Steuerung 14a-c bzw. 15a-c einer Untereinheit parallelen Zugriff auf die zugehörige statische Starteinrichtung 12 bzw. 13. Der erste Kanal 19 bzw. 21 ist dabei reserviert für die Steuerungen der zugehörigen Gruppe G1 bzw. G2. Der zweite Kanal 20 bzw. 22 ist ausschliesslich für Notfälle reserviert und wird nur in den Notfällen aktiviert, wenn die statische Starteinrichtung der anderen Gruppe nicht zur Verfügung steht. In den übrigen Fällen werden ankommende Signale ignoriert und Ausgangssignale der zweiten Kanäle 20 bzw. 22 werden (im Fall von fest verdrahteten Signalen) durch offene Relaiskontakte blockiert. Wenn fest verdrahtete Signale verwendet werden, müssen alle Signale innerhalb desselben elektrischen Schaltkreises galvanisch getrennt werden. Eine Verbindung zu dem gemeinsamen Signalbus und ein Datenaustausch kann nur dann zugelassen werden, wenn eine Steuerung die Belegungsrechte für eine Starteinrichtung erhalten hat. Diese Belegungsrechte werden exklusiv durch die beschriebene dezentralisierte Zuweisungslogik der Erfindung vergeben.

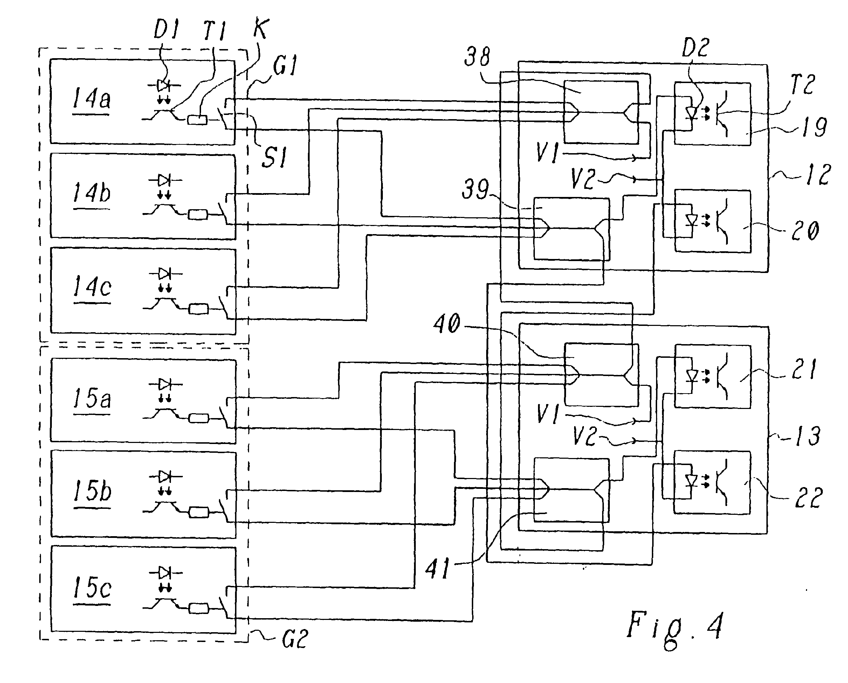

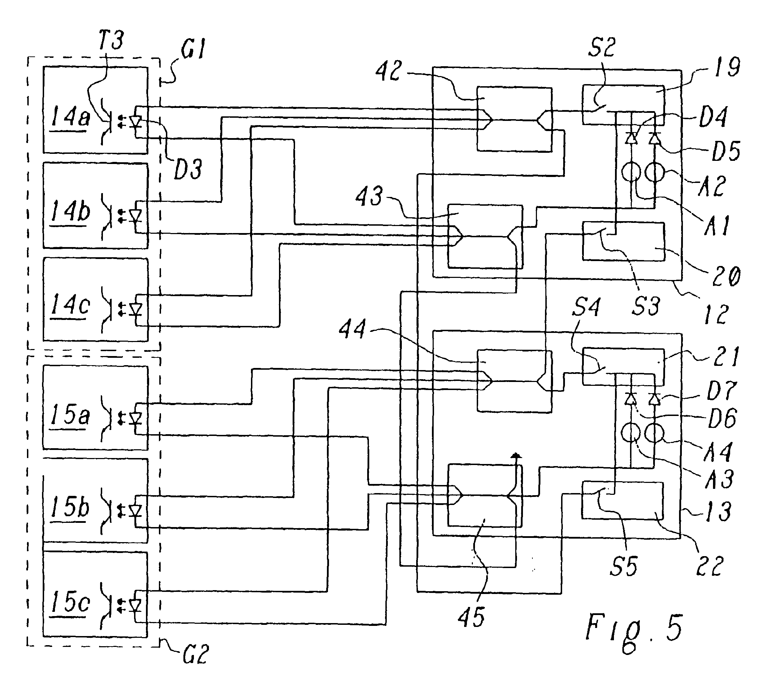

Die Zuweisung von binären Signalen zwischen den Steuerungen 14a-c und 15a-c und den statischen Starteinrichtungen 12 und 13 erfolgt vorzugsweise in der in Fig. 4 und 5 dargestellten Form. In Fig. 4 sind die Ausgänge der Steuerungen 14a-c und 15a-c in der dargestellten Weise über jeweils zwei Anschlussstellen 38, 39 und 40, 41 mit den Eingängen der beiden Kanäle 19, 20 bzw. 21, 22 der beiden Starteinrichtungen 12 und 13 verbunden. Die (entkoppelten) Ausgänge der Steuerungen (z.B. vom Typ Egatrol der Anmelderin) sind jeweils durch einen Optokoppler (D1 und T1), eine Relaisspule (K) und einen Relaiskontakt (S1) symbolisiert, die (entkoppelten) Eingänge der Kanäle 19-22 jeweils durch einen Optokoppler (D2 und T2). Die in den etablierten Schaltkreisen liegenden Optokopplereingänge (Leuchtdioden D2) werden durch entsprechende Spannungseingänge V1, V2 mit einer 24V-Gleichspannung versorgt.

In Fig. 5 sind die Eingänge der Steuerungen 14a-c und 15a-c in der dargestellten Weise über jeweils zwei Anschlussstellen 42, 43 und 44, 45 mit den Ausgängen der beiden Kanäle 19, 20 bzw. 21, 22 der beiden Starteinrichtungen 12 und 13 verbunden. Die (entkoppelten) Eingänge der Steuerungen sind jeweils durch einen Optokoppler (Leuchtdiode D3 und einen Transistor T3), die Ausgänge der Kanäle 19-22 jeweils durch einen Relais-Kontakt S2-S5 symbolisiert. Die in den Schaltkreisen liegenden Leuchtdioden D3 werden durch entsprechende Spannungsquellen A1-A4 über Dioden D4-D7 mit einer 24V-Gleichspannung versorgt. Die eine Anschlussstelle 45 ist darüber hinaus geerdet.

Werden anstelle der binären Signale über einen Bus übertragene Signale verwendet, erfolgt die Zuweisung zwischen den Steuerungen und den Starteinrichtungen in einer zu Fig. 4 und 5 analogen Weise.

### BEZUGSZEICHENLISTE

- 10,10': Kraftwerksanlage
- 11: zentrale Steuerung
- 12,13: statische Starteinrichtung (SSD)
- 14a-c: Steuerung (Untereinheit)
- 15a-c: Steuerung (Untereinheit)
- 16,..,18: Segment-Trennschalter
- 19,..,22: Kanal
- 23: Verbindungsleitung
- 24,25: statischer Frequenzumrichter (SFC)
- 26: Segment-Trennschalter
- 27a-f: Anfahr-Trennschalter
- 28,..,33: UND-Gatter
- 34,35: ODER-Gatter
- 36,37: Flag-Ausgang
- 38,..,45: Anschlussstelle
- A1,..,A4: Stromquelle
- D1,..,D3: Leuchtdiode (Optokoppler)
- D4,..,D7: Diode
- G1,G2: Gruppe (von Untereinheiten)
- K: Relaisspule
- S1,..,S5: Relaiskontakt
- V1,V2: Spannungseingang
- T1, T2: Transistor

## Patentansprüche

1. Kraftwerksanlage (10') mit einer Mehrzahl von gleichartigen Untereinheiten, die jeweils eine Turbine resp. Pump-Turbine und einen mit der Turbine resp. Pump-Turbine verbundenen Generator/Motor umfassen, welcher Generator/Motor bei Hochfahren der Untereinheit als Motor betrieben werden kann, wobei zum Hochfahren der Untereinheiten wenigstens eine statische Starteinrichtung (12, 13) vorgesehen ist, welche wahlweise mit einer der Untereinheiten verbunden werden kann, und jeder Untereinheit eine eigene Steuerung (14a-c; 15a-c) zugeordnet ist, **dadurch gekennzeichnet, dass** die Steuerungen (14a-c; 15a-c) der Untereinheiten mit der wenigstens einen statischen Starteinrichtung (12, 13) derart verbunden sind, dass zu jedem Zeitpunkt in jeder der Steuerungen (14a-c; 15a-c) die gleiche Information über die Verfügbarkeit der statischen Starteinrichtung (12, 13) vorliegt.

2. Kraftwerksanlage nach Anspruch 1, **dadurch gekennzeichnet, dass** zur Beschreibung der Verfügbarkeit der statischen Starteinrichtung (12, 13) ein Belegungssignal ("flag") verwendet wird, welches gesetzt wird, wenn eine der Steuerungen (14a-c; 15a-c) unter Einsatz der zugehörigen statischen Starteinrichtung (12 bzw. 13) einen Start einleitet, und zurückgesetzt wird, wenn keine der Steuerungen (14a-c; 15a-c) einen Start einleitet und die zugehörige statische Starteinrichtung (12 bzw. 13) frei verfügbar ist.

3. Kraftwerksanlage nach Anspruch 2, **dadurch gekennzeichnet, dass** das Belegungssignal von einer Funktion oder Einheit der Kraftwerksanlage (10') abgeleitet wird, welche eine sichere Anzeige des momentanen Belegungszustandes der statischen Starteinrichtung (12, 13) ermöglicht.

4. Kraftwerksanlage nach Anspruch 3, **dadurch gekennzeichnet, dass** das Belegungssignal durch die statische Starteinrichtung (12, 13) selbst erzeugt wird.

5. Kraftwerksanlage nach Anspruch 3, **dadurch gekennzeichnet, dass** das Belegungssignal durch ein Bauteil bzw. eine Einheit erzeugt wird, welche(s) der jeweiligen Untereinheit zugeordnet ist und seinen Zustand ändert, wenn ein Startvorgang eingeleitet wird.

6. Kraftwerksanlage nach Anspruch 5, **dadurch gekennzeichnet, dass** zum Verbinden von Untereinheit und statischer Starteinrichtung (12, 13) beim Startvorgang jeweils ein Anfahr-Trennschalter (27a-f) vorgesehen ist, welcher als Hochspannungsschalter die statische Starteinrichtung (12, 13) mit dem Generatorbus der Untereinheit verbindet, und dass das Belegungssignal von dem Anfahr-Trennschaltern (27a-f) erzeugt bzw. abgeleitet wird.

7. Kraftwerksanlage nach einem der Ansprüche 1 bis 6, **dadurch gekennzeichnet, dass** die Untereinheiten bzw. deren Steuerungen (14a-c; 15a-c) zu Gruppen (G1, G2) zusammengefasst sind, und dass jeder Gruppe (G1, G2) für den Normalbetrieb eine eigene statische Starteinrichtung (12, 13) zugeordnet ist.

8. Kraftwerksanlage nach Anspruch 7, **dadurch gekennzeichnet, dass** jede der Steuerungen (14a-c; 15a-c) einer Gruppe (G1, G2) mit der zugehörigen statischen Starteinrichtung (12, 13) über einen ersten Kanal (19 bzw. 21) verbunden ist, dass jede der Steuerungen (14a-c; 15a-c) einer Gruppe (G1, G2) mit der statischen Starteinrichtung (13, 12) einer anderen Gruppe (G2, G1) über einen zweiten Kanal (22 bzw. 20) verbunden ist, und dass die Verbindung über die zweiten Kanäle (20, 22) nur dann aktiviert ist, wenn in einem Notfall die eigene statische Starteinrichtung der Gruppe nicht verfügbar ist.

9. Kraftwerksanlage nach einem der Ansprüche 1 bis 8, **dadurch gekennzeichnet, dass** die Verbindung zwischen den Steuerungen (14a-c; 15a-c) und den zugehörigen statischen Starteinrichtungen (12, 13) durch eine feste Verdrahtung erfolgt.

10. Kraftwerksanlage nach einem der Ansprüche 1 bis 8, **dadurch gekennzeichnet, dass** die Verbindung zwischen den Steuerungen (14a-c; 15a-c) und den zugehörigen statischen Starteinrichtungen (12, 13) über einen Daten- bzw. Signalbus erfolgt.

## Claims

1. Power station system (10') having a number of identical subunits, which each comprise a turbine or pump turbine and a generator/motor connected to the turbine or pump turbine, which generator/motor can be operated as a motor during acceleration of the subunit, with at least one static starting device (12, 13) being provided for acceleration of the subunits, which static starting device (12, 13) can selectively be connected to one of the subunits, and each subunit has its own associated controller (14a-c, 15a-c), **characterized in that** the controllers (14a-c, 15a-c) of the subunits are connected to the at least one static starting device (12, 13) such that the same information about the availability of the static starting device (12, 13) is available at all times in each of the controllers (14a-c, 15a-c).

2. Power station system according to claim 1, **characterized in that** a busy signal ("flag") is used to describe the availability of the static starting device (12, 13) and is set when one of the controllers (14a-c, 15a-c) initiates a start using the associated static starting device (12 or 13, respectively), and is reset when none of the controllers (14a-c, 15a-c) initiates a start and the associated static starting device (12 or 13, respectively) is freely available.

3. Power station system according to claim 2, **characterized in that** the busy signal is derived from a function or unit in the power station system (10') which allows reliable indication of the busy status of the static starting device (12, 13) at that time.

4. Power station system according to claim 3, **characterized in that** the busy signal is produced by the static starting device (12, 13) itself.

5. Power station system according to claim 3, **characterized in that** the busy signal is produced by a component or a unit which is associated with the respective subunit and whose status changes when a starting process is initiated.

6. Power station system according to claim 5, **characterized in that** a starting isolating switch (27a-f) is in each case provided for connecting the subunit and static starting device (12, 13) during a starting process and, as a high-voltage switch, connects the static starting device (12, 13) to the generator bus of the subunit, and **in that** the busy signal is produced or derived from the starting isolating switches (27a-f).

7. Power station system according to one of claims 1 to 6, **characterized in that** the subunits and their controllers (14a-c; 15a-c) are combined to form groups (G1, G2), and **in that** each group (G1, G2) has its own dedicated static starting device (12, 13) for normal operation.

8. Power station system according to claim 7, **characterized in that** each of the controllers (14a-c; 15a-c) in a group (G1, G2) is connected to the associated static starting device (12, 13) via a first channel (19 or 21, respectively), **in that** each of the controllers (14a-c; 15a-c) in a group (G1, G2) is connected to the static starting device (13, 12) of another group (G2, G1) via a second channel (22 or 20, respectively), and **in that** the connection via the second channels (20, 22) is activated only when the dedicated static starting device in the group is not available in an emergency.

9. Power station system according to one of claims 1 to 8, **characterized in that** the connection between the controllers (14a-c; 15a-c) and the associated static starting devices (12, 13) is produced by permanent wiring.

10. Power station system according to one of claims 1 to 8, **characterized in that** the connection between the controllers (14a-c; 15a-c) and the associated static starting devices (12, 13) is produced via a data or signal bus.

## Revendications

1. Centrale électrique (10') qui présente plusieurs sous-unités de même type qui comprennent chacune une turbine ou une pompe-turbine ainsi qu'un générateur/moteur relié à la turbine ou à la pompe-turbine, lequel générateur/moteur peut être utilisé comme moteur lors du démarrage de la sous-unité, et dans laquelle au moins un dispositif statique de démarrage (12, 13) qui peut être relié sélectivement à l'une des sous-unités est prévu pour démarrer les sous-unités, une commande propre (14a-c; 15a-c) étant associée à chaque sous-unité, **caractérisée en ce que** les commandes (14a-c; 15a-c) des sous-unités sont reliées à au moins un dispositif statique de démarrage (12, 13) de telle sorte que chacune des commandes (14a-c; 15a-c) dispose en permanence des mêmes informations sur la disponibilité du dispositif statique de démarrage (12, 13).

2. Centrale électrique selon la revendication 1, **caractérisée en ce que** pour décrire la disponibilité du dispositif statique de démarrage (12, 13), on utilise un signal d'occupation ("indicateur") qui est sorti lorsque l'une des commandes (14a-c; 15a-c) lance un démarrage en utilisant le dispositif statique de démarrage (12 ou 13) associé et qui est rentré lorsque aucune des commandes (14a-c; 15a-c) ne lance un démarrage et que le dispositif statique de démarrage (12 ou 13) associé est disponible.

3. Centrale électrique selon la revendication 2, **caractérisée en ce que** le signal d'occupation est dérivé d'une fonction ou d'une entité de la centrale électrique (10') qui permet un affichage sûr de l'état instantané d'occupation du dispositif statique de démarrage (12, 13).

4. Centrale électrique selon la revendication 3, **caractérisée en ce que** le signal d'occupation est créé par le dispositif statique de démarrage (12, 13) proprement dit.

5. Centrale électrique selon la revendication 3, **caractérisée en ce que** le signal d'occupation est créé par un composant ou une entité qui sont associées à chaque sous-unité et dont l'état se modifie lorsqu'une opération de démarrage est lancée.

6. Centrale électrique selon la revendication 5, **caractérisée en ce que** lors de l'opération de démarrage, un commutateur de séparation de démarrage (27a-f) respectif est prévu pour relier une sous-unité et le dispositif statique de démarrage (12, 13) et relie comme commutateur à haute tension le dispositif statique de démarrage (12, 13) au bus du générateur de la sous-unité, et **en ce que** le signal d'occupation est créé ou dérivé des commutateurs de séparation de démarrage (27a-f).

7. Centrale électrique selon l'une des revendications 1 à 6, **caractérisée en ce que** les sous-unités et leurs commandes (14a-c; 15a-c) sont rassemblées en groupes (G1, G2) et **en ce qu'**un dispositif statique de démarrage propre (12, 13) est associé à chaque groupe (G1, G2) pour le fonctionnement normal.

8. Centrale électrique selon la revendication 7, **caractérisée en ce que** chacune des commandes (14a-c; 15a-c) d'un groupe (G1, G2) est reliée par un premier canal (19 ou 21) au dispositif statique de démarrage (12, 13) associé, **en ce que** chacune des commandes (14a-c; 15a-c) d'un groupe (G1, G2) est reliée par un deuxième canal (22 ou 20) au dispositif statique de démarrage (13, 12) de l'autre groupe (G2, G1) et **en ce que** la liaison par les deuxièmes canaux (20, 22) n'est activée que si en cas d'urgence, le dispositif statique de démarrage propre du groupe n'est pas disponible.

9. Centrale électrique selon l'une des revendications 1 à 8, **caractérisée en ce que** la liaison entre les commandes (14a-c; 15a-c) et les dispositifs statiques de démarrage (12, 13) associés est réalisée par un câblage fixe.

10. Centrale électrique selon l'une des revendications 1 à 8, **caractérisée en ce que** la liaison entre les commandes (14a-c; 15a-c) et les dispositifs statiques de démarrage (12, 13) associés s'effectue par un bus de données ou de signaux.
